# EUROPÄISCHE PATENTSCHRIFT

(11) **EP 1 528 275 B1**
(45) Veröffentlichungstag und Bekanntmachung des Hinweises auf die Patenterteilung: **13.09.2006**
(21) Anmeldenummer: 04024737.1
(22) Anmeldetag: 16.10.2004
(51) Int. Cl.: F16D 3/38, F16F 15/34

(54) **Kreuzgelenkanordnung mit einer Wuchtanordnung und Wuchtgewicht**
Universal joint assembly with a balancing arrangement having balancing weight
Ensemble de joint universel avec un dispositif d'équilibrage comprennant masselotte d'équilibrage

(30) Priorität: 31.10.2003 DE 10351291; 09.03.2004 DE 102004011271
(43) Veröffentlichungstag der Anmeldung: 04.05.2005
(73) Patentinhaber: Voith Turbo GmbH & Co. KG, 89522 Heidenheim (DE)
(72) Erfinder: Grawenhof, Peter, 89547 Dettingen (DE); Piott, Georg, 91550 Dinkelsbühl (DE)
(74) Vertreter: Dr. Weitzel & Partner

(56) Entgegenhaltungen:
- DE-A- 2 314 281
- DE-C- 10 223 848
- DE-C- 10 223 849
- DE-U- 7 736 016
- FR-A- 1 351 827
- PATENT ABSTRACTS OF JAPAN Bd. 0090, Nr. 22 (M-354), 30. Januar 1985 (1985-01-30) -& JP 59 166717 A (KOYO SEIKO KK), 20. September 1984 (1984-09-20)
- PATENT ABSTRACTS OF JAPAN Bd. 2000, Nr. 03, 30. März 2000 (2000-03-30) -& JP 11 342757 A (MITSUBISHI MOTORS CORP), 14. Dezember 1999 (1999-12-14)

## Beschreibung

Die Erfindung betrifft eine Kreuzgelenkanordnung mit einer Wuchtanordnung im einzelnen mit den Merkmalen aus dem Obergriff des Anspruches 1.

Kreuzgelenkanordnungen mit Wuchtanordnungen sind in unterschiedlichster Ausführungen bekannt. Eine gattungsgemäße Ausführung ist in der Druckschrift DE 102 23 848 C1 beschrieben. Die Kreuzgelenkanordnung umfasst dabei zwei Gelenkgabeln, die jeweils zwei Gabelarme aufweisen, in denen jeweils auf einer gemeinsamen Bohrungsachse zentriert eine Lagerbohrung angeordnet ist, die eine Nut aufweist. Ferner umfasst diese eine Zapfenkreuzgarnitur mit vier Zapfen, wobei jeder Zapfen in einer Lagerbuchse, die jeweils einen eine Außenfläche aufweisenden Boden besitzt, in der Lagerbohrung gelagert ist und über einen Sicherungsring in axialer Richtung in der Lagerbohrung gehalten wird. Ferner ist ein Wuchtgewicht vorgesehen, das als Scheibe gestaltet ist, die radial außen bezogen auf die Bohrungsachse einen Befestigungsabschnitt aufweist, der zwischen dem Boden und dem Sicherungsring angeordnet ist und die zentral einen Wuchtmassenabschnitt aufweist, der eine zum Unwuchtausgleich dienende Masse darstellt. Dabei werden die Wuchtgewichte im Bereich der Stirnseite der einzelnen Zapfen der Zapfenanordnung gelagert und damit im Konzentrationsbereich von Unwuchten bei einer Kreuzgelenkwelle bzw. bei Kreuzgelenken. Dies bietet den Vorteil, dass im Reparaturfall ein leichtes Wiederauswuchten möglich ist, da die Wuchtgewichte somit lösbar angebracht sind. Ein Nachteil dieser Ausführung besteht jedoch im wesentlichen darin, dass die Fixierung der Lageranordnung zum einen über die zugeordneten Sicherungsringe erfolgt, wobei je nach Ausgestaltung des Wuchtgewichtes dies mit einem erheblichen Bauraumzuwachs in axialer Richtung verbunden ist. Ferner ist es lediglich möglich, im vom Innendurchmesser des Sicherungsringes umschlossenen Bereich und außerhalb der Befestigungsflächen des scheibenförmigen Elementes die einzelnen Massen anzuordnen. Eine Austauschbarkeit der Wuchtgewichte ist nur durch Lösen des Sicherungsringes gegeben. Ferner ist eine Zugängigkeit zur Lagerschmierung nur bei gelöstem Wuchtgewicht gegeben.

Der Erfindung liegt daher die Aufgabe zugrunde, eine Kreuzgelenkanordnung mit einer Wuchtanordnung, insbesondere ein Wuchtgewicht der eingangs genannten Art derart weiterzuentwickeln, dass die genannten Nachteile vermieden werden. Im Einzelnen ist auf eine einfache Handhabbarkeit im Hinblick auf den Austausch der Wuchtgewichte sowie eine einfache Realisierung der Lagerschmierung abzustellen. Dies soll unabhängig von der Lageranordnung im eingebauten Zustand möglich sein. Die Gesamtanordnung soll sich durch einen geringen Bauraumbedarf in axialer Richtung auszeichnen.

Die erfindungsgemäße Lösung ist durch die Merkmale von Anspruch 1 charakterisiert. Vorteilhafte Ausgestaltungen sind jeweils in den Unteransprüchen beschrieben.

Die einzelne Kreuzgelenkanordnung umfasst zwei Gelenkgabeln, umfassend je nach Ausführung wenigstens einen Flanschteil und zwei Lagerteile, in denen jeweils auf einer gemeinsamen Bohrungsachse zentriert eine Lagerbohrung angeordnet ist. Ein Zapfen eines Zapfenkreuzes ist über eine Lagerbuchse in der Lagerbohrung gelagert. Das Zapfenkreuz umfasst dabei vier um jeweils 90° versetzte Zapfen, von denen jeweils zwei auf einer gemeinsamen Achse angeordnet sind und die sich in einer Ebene kreuzen oder aber deren gemeinsame Achsen um 90° gedreht sind und in zwei in axialer Richtung zueinander versetzten Ebenen angeordnet sind. Die einzelnen Zapfen stützen sich dabei über eine Lageranordnung, der eine Lagerbuchse zugeordnet ist, in der Gelenkgabel ab. Zur Festlegung in axialer Richtung der Lagerbuchse ist wenigstens ein Sicherungsring vorgesehen, der die Lagerbuchse in axialer Richtung fixiert. Der Sicherungsring ist dazu in einer Nut in der Lagerbohrung angeordnet. Dem einzelnen Zapfen ist erflndungsgemäß ferner eine Wuchtanordnung, insbesondere ein Wuchtgewicht, zugeordnet, das ringscheibenförmig oder vieleckförmig mit Durchgangsöffnung gestaltet ist und das einen Wuchtmassenabschnitt aufweist, der eine zum Unwuchtausgleich dienende Masse realisiert. Gemäß einem ersten Lösungsansatz ist das Wuchtgewicht als kreisringförmiges Element oder Vieleckelement, insbesondere drei- oder viereckiges Element, ausgeführt, umfassend eine Durchgangsbohrung, deren Achse in Einbaulage betrachtet mit der Zapfenachse zusammenfällt und der Führung eines Befestigungsmittels dient. Das Wuchtgewicht bzw. das kreisringförmige Element, insbesondere Scheibe oder Vieleckelement weist einen Durchmesser bzw. Außenabmessungen in radialer Richtung auf, die kleiner als der Innendurchmesser des Sicherungsringes sind. Dieses wird vom Sicherungsring quasi umschlossen bzw. ist in dem vom Innenumfang des Sicherungsringes begrenzten Raum angeordnet, wobei diese Anordnung frei von einem Kontakt zwischen dem Wuchtgewicht und dem Sicherungsring ist. Das Wuchtgewicht weist ferner eine Auflagefläche auf, mit welcher es an der Lagerbuchse, zumindest an einem Teilbereich dessen zum Anliegen kommt und ferner eine auf der von der Auflagenfläche abgewandten Stirnseite weitere zweite Auflagefläche bzw. Anlage für das Befestigungsmittel. Das Befestigungsmittel fixiert dabei das Wuchtgewicht in axialer Richtung gegenüber dem Zapfen des Zapfenkreuzes durch Formschluss oder Kraftschluss mit zumindest der Lagerbuchse und/oder aber dem in der Lagerbohrung gelagerten Zapfen des Zapfenkreuzes. Das Wuchtgewicht ist somit quasi zwischen der Anlagefläche des Befestigungselementes und dem Zapfen bzw. der Lagerbuchse eingespannt. Die Anordnung des Wuchtgewichtes erfolgt dabei innerhalb des Sicherungsringes, d. h. unter Ausnutzung der axialen Erstreckung des vom Sicherungsring umschlossenen Innenraumes. Diese Anordnung bietet den Vorteil, dass zum einen kein zusätzlicher axialer Bauraum für die Befestigung benötigt wird und ferner das Befestigungsmittel sich zum größten Teil im Bereich der axialen Erstreckung des Wuchtgewichtes befinden kann. Ferner ist das Wuchtgewicht ohne Lösung des Sicherungsringes frei austauschbar. D. h., die Lageranordnung bleibt beim Austausch des Wuchtgewichtes von diesem unbeeinflusst. Ferner kann gemäß einer besonders vorteilhaften Ausgestaltung über das Befestigungsmittel zusätzlich eine Schmiermittelzufuhr realisiert werden, die ebenfalls sehr einfach von der Stirnseite des Zapfens her zugänglich ist. Dazu kann über das Befestigungsmittel ein entsprechender verschließbarer Verbindungskanal realisiert werden, der vorzugsweise von der Stirnseite her zugänglich ist.

Die erfindungsgemäße Ausführung der Kreuzgelenkanordnung mit Wuchtgewicht zeichnet sich somit gegenüber der aus dem Stand der Technik bekannten Ausführung unter Beibehaltung der dort beschriebenen Vorteile durch eine wesentlich einfachere Handhabbarkeit hinsichtlich der Austauschbarkeit, der freien Zugängigkeit und der Gewährleistung der Schmiermittelversorgung für die Lageranordnung aus.

Für die Ausgestaltung der Befestigungsmittel bestehen eine Mehrzahl von Möglichkeiten. Diese sind im einfachsten Fall als bolzenförmige oder stufenscheibenartige Elemente ausgeführt, die wenigstens einen Kopfteil umfassen und einen Verbindungsteil, wobei der Verbindungsteil durch geringere Außenabmessungen als der Kopfteil charakterisiert ist und sich durch die Durchgangsöffnung am Wuchtgewicht erstreckt. Ferner weisen diese Mittel zur Realisierung einer form- und/oder kraftschlüssigen Verbindung mit der Lagerbuchse oder dem Zapfenkreuz, insbesondere dem Zapfen, auf. Der Kopfteil bietet dabei eine Anschlagfläche zum Anliegen an der von der Auflagefläche an der Lagerbuchse weggerichteten Stirnseite des kreisringförmigen Elementes. Zusätzlich kann gemäß einer Weiterentwicklung das Befestigungsmittel mit weiteren Funktionen ausgestaltet sein. Beispielsweise ist die Realisierung eines Schmiermittelkanals durch das Befestigungsmittel denkbar, wobei in diesem Fall das Befestigungsmittel an der Lagerbuchse oder aber dem Zapfen in einem Bereich angeordnet ist, der Schmiermittel führt. Dies kann ein Zwischenraum zwischen der Zapfenstirnseite und der Lagerbuchse sein oder aber beispielsweise ein sich durch den Zapfen erstreckender Kanal.

Bezüglich der Querschnittsgeometrie der Befestigungsmittel bestehen keine Einschränkungen. Dabei wird vorzugsweise immer eine bezüglich wenigstens einer Achse symmetrische Anordnung gewählt. Vorzugsweise werden jedoch rotationssymmetrische Ausführungen verwendet, deren Schwerpunkt ebenfalls in Einbaulage mit der Zapfenachse zusammenfallen. Daher werden In der Regel kreisrunde Querschnittsausführungen gewählt.

Gemäß einer besonders vorteilhaften Ausgestaltung ist das Wuchtgewicht als Stufenscheibe ausgeführt, umfassend einen ersten Teilbereich und einen zweiten Teilbereich, wobei der erste Teilbereich die Auflagefläche an der Lagerbuchse und ferner an der von dieser abgewandten Stirnseite einen Flächenbereich bildet, der dem Anliegen des Befestigungsmittels dient. Der zweite Teilbereich ist vorzugsweise ringförmig gestaltet und erstreckt sich im Bereich des Außenumfanges des ersten Teilbereiches in radialer Richtung vollständig um diesen sowie in axialer Richtung von diesem weg. Der so in der Ebene des zweiten Teilbereiches gebildete Zwischenraum dient der Aufnahme des Kopfes des Befestigungsmittels. Damit wird zum einen eine Verlagerung der Massen in den Bereich des Außenumfanges, d. h. außerhalb der Zapfenachse in Einbaulage betrachtet bzw. außerhalb der die Durchgangsöffnung charakterisierenden Achse unter Beibehaltung des Massenschwerpunktes des Gesamtwuchtgewichtes an der verlängerten Zapfenachse realisiert, wobei der Raum bis zum Innenumfang des Sicherungsringes vollständig ausgenutzt werden kann und ferner in axialer Richtung der erforderliche Bauraum minimiert wird, indem ein Hauptteil der Massen, insbesondere der das Gewicht bildende Bereich und das Befestigungsmittel sowie der Sicherungsring nahezu in einer Ebene bzw. in zueinander in axialer Richtung mit geringem Abstand angeordneten Ebenen liegen. Diese Anordnung bietet den Vorteil einer hohen Konzentration der funktionstragenden Elemente in einem Bereich mit geringer axialer Erstreckung.

Die erfindungsgemäße Lösung wird nachfolgend anhand von Figuren erläutert. Darin ist im einzelnen Folgendes dargestellt:
- Figuren 1a und 1b: verdeutlichen in schematisch vereinfachter Darstellung eine Ausführung einer erfindungsgemäßen Kreuzgelenkanordnung mit Wuchtanordnung im Axialschnitt;
- Figuren 2a - 2c: verdeutlichen mögliche Ausgestaltung eines Wuchtgewichtes.

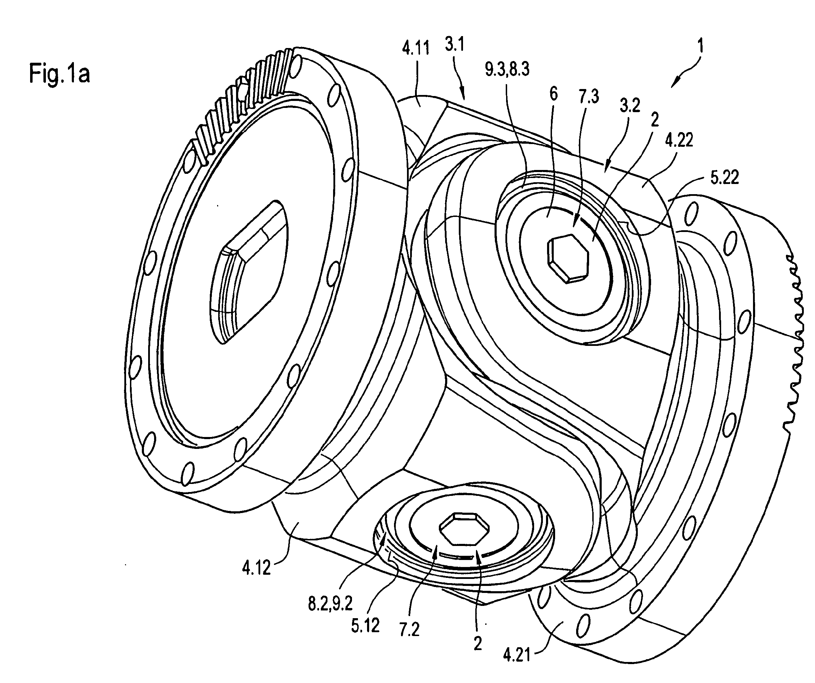

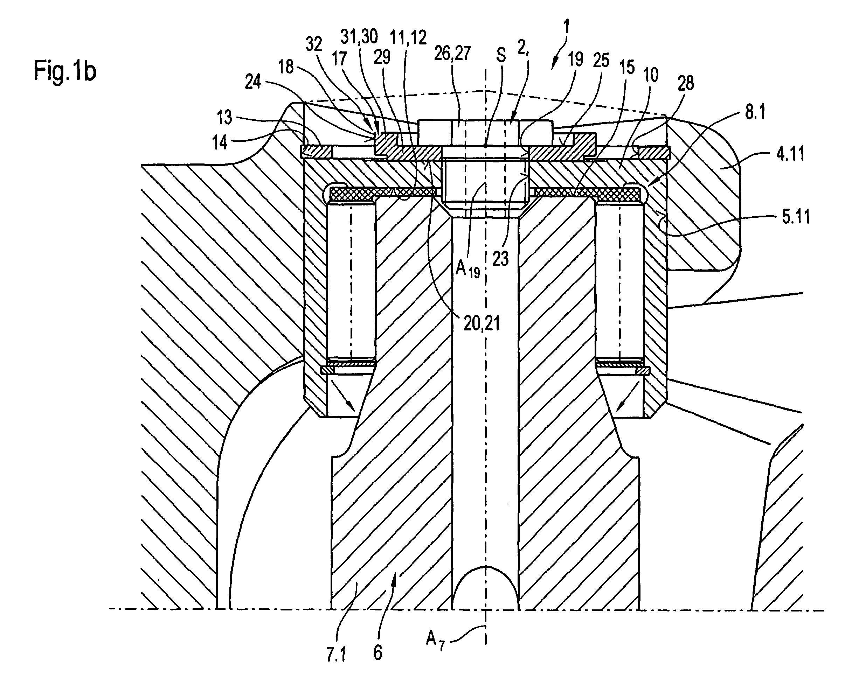

Die Figur 1b verdeutlicht anhand eines Ausschnittes aus einem Axialschnitt durch eine Kreuzgelenkanordnung 1 gemäß Figur 1a eine erfindungsgemäße Ausführung dieser mit Wuchtanordnung 2 im Einbauzustand. Die Kreuzgelenkanordnung 1 umfasst zwei Gelenkgabeln 3.1 und 3.2, wobei jede der Gelenkgabeln zwei Gabelarme umfassend ein Lagerteil 4.11, 4.12 bzw. 4.21 und 4.22 aufweist, in denen jeweils auf einer gemeinsamen Bohrungsachse zentriert Bohrungen 5.11, 5.12 sowie 5.21, 5.22 angeordnet sind, wobei hier nur 5.12 und 5.22 ersichtlich sind. Die Kreuzgelenkanordnung 1 umfasst ferner ein Zapfenkreuz 6, umfassend vier Zapfen 7.1 bis 7.4, von denen jeweils zwei auf einer gemeinsamen Achse angeordnet sind, wobei diese sich rechwinklig in einer Ebene oder aber in zwei Ebenen zueinander versetzt kreuzen. Das Zapfenkreuz 6, insbesondere die einzelnen Zapfen 7.1 bis 7.4 hier nur 7.2 und 7.3 erkennbar, sind dabei in den Lagerbohrungen 5.11, 5.12, 5.21 und 5.22 gelagert. Die Lagerung erfolgt über Lageranordnungen 8.1 bis 8.4, wobei diese wenigstens ein Radiallager 9.1 bis 9.4 umfassen. Das Radiallager 9.1 bis 9.4 stützt sich dabei jeweils, wie in Figur 1 b für den Zapfen 7.1 in der Gelenkgabelhälfte 4.11 dargestellt, über eine Lagerbuchse 10 in der jeweiligen Lagerbohrung 5.11 bis 5.22 ab. Die Lagerbuchse 10 weist dabei jeweils einen in axialer Richtung, hier für die Lageranordnung 8.1 mit 11 bezeichnete Außenfläche aufweisenden Boden 12 auf, in dem jeweils der Zapfen, hier der Zapfen 7.1, gelagert ist. Die Lagerbuchse 10 ist dabei in axialer Richtung über einen Sicherungsring 13 fixiert. Dieser ist dazu in eine Nut 14 in der Lagerbohrung 5.11 geführt. Der Stirnseite 15 des Zapfens 7.1 ist eine Wuchtanordnung 16 zugeordnet, umfassend ein Wuchtgewicht 17, welches als kreisringförmiges Element 18 ausgebildet ist und zentral eine Durchgangsöffnung 19 aufweist. Die Achse der Durchgangsöffnung 19 fällt dabei in Einbaulage mit der Zapfenachse A₇ des Zapfens 7.1 zusammen. Das Wuchtgewicht 17 ist derart ausgestaltet, dass in Einbaulage dessen Schwerpunkt S mit der Zapfenachse A₇ zusammenfällt bzw. im nicht eingebauten Zustand der Schwerpunkt S auf der Achse A₁₈ der Durchgangsöffnung 19 liegt.

Das Wuchtgewicht 17, insbesondere das kreisringförmige Element 18, umfasst dazu einen ersten, in Einbaulage in axialer Richtung zur Stirnfläche 15 des Zapfens 7.1 weisenden Flächenbereich 20, welcher eine Auflagefläche 21 zur Anlage des kreisringförmigen Elementes 18 an der Lagerbuchse 10 bildet. Ferner umfasst das kreisringförmige Element 18 an der von der Auflagefläche 21, insbesondere dem Flächenbereich 20 weggerichteten Stirnseite, eine Fläche bzw. einen Flächenbereich 22, der sich vom Innenumfang 23 der Durchgangsöffnung 19 in Richtung zum Außenumfang 24 des ringförmigen Elementes 18 erstreckt und eine Auflagefläche 25 für ein Befestigungselement 26, vorzugsweise in Form eines Bolzen- oder Schraubenelementes 27 bildet, welches mit der Lagerbuchse 10 oder aber dem Zapfen 7.1 form- oder kraftschlüssig verbindbar ist. Das Befestigungselement 26 umfasst einen Kopfteil 43 und einen Verbindungsteil 44, wobei über den Verbindungsteil 44 die Kopplung des Wuchtgewichtes 17 an den Zapfen 7.1 durch Verspannen bzw. Klemmung zwischen Kopfteil 43 und Lagerbuchse 10 realisiert wird. Der Kopfteil 43 weist dazu einen größeren Durchmesser als der Verbindungsteil 44 auf, so dass dieser eine Anlagefläche bildet, die an der am Wuchtgewicht 17 ausgebildeten Abstützfläche 25 zum Anliegen kommt. Das kreisringförmige Element 18 ist ferner derart ausgestaltet, dass dessen Außenumfang 24 bzw. der diesen beschreibende Durchmesser kleiner ist als der Innenumfang 28 des Sicherungsringes 13. Damit kann das Wuchtgewicht 17, insbesondere die Auflagefläche 21, in einer Ebene mit dem Sicherungsring 13 angeordnet werden. Dies bedeutet, das Wuchtgewicht 17 wird durch den Sicherungsring 13 geführt, wobei die Führung vorzugsweise frei von einem Kontakt von Wuchtgewicht 17 und Sicherungsring 13 miteinander ist. Damit wird der in axialer Richtung durch den Sicherungsring 13 ohnehin in Anspruch genommene und nicht genutzte Bauraum gleichzeitig für das Wuchtgewicht 17 genutzt. D. h., das Wuchtgewicht 17 wird in den Sicherungsring 13 wenigstens teilweise hinein versenkt.

Vorzugsweise ist das Wuchtgewicht 17 wie in der Figur 1b dargestellt ausgeführt. Dieses umfasst im Querschnitt betrachtet zwei Teilbereiche, einen ersten Teilbereich 29 und einen zweiten Teilbereich 30, wobei der erste Teilbereich 29 die Auflagefläche 21 für die Lagerung an der Lagerbuchse 10 sowie die Auflagefläche 25 für das Befestigungselement 26 an den beiden voneinander wegweisenden Stirnseiten bildet. Der zweite Teilbereich 30 ist als bauliche Einheit mit dem ersten Teilbereich 29 ausgeführt, vorzugsweise als integrales Bauteil, wobei der zweite Teilbereich 30, wie in der Figur 1 dargestellt, beispielsweise als im Bereich des Außenumfanges 24 angeordnete und in Umfangsrichtung, d. h. in radialer Richtung bezogen auf die Achse der Durchführungsöffnung, ringförmige Erhebung 31 ausgebildet ist. Das Wuchtgewicht 17 hat somit die Ausgestaltung einer Stufenscheibe 32, wobei beiden Bereichen unterschiedliche Funktionen zukommen können. Der erste Teilbereich 29 dient dabei im wesentlichen der Auflage an der Lagerbuchse 10 sowie der Realisierung der Abstützfläche 25 bzw. Verspannfläche für das Befestigungselement, während der zweite Teilbereich hauptsächlich als Massebereich definiert sein kann, der durch eine bestimmte Gewichtsverteilung charakterisiert ist. Diese Funktion kommt jedoch auch dem ersten Teilbereich 29 zu. Die Ausbildung als Stufenscheibe 32 bietet des weiteren den Vorteil, dass das Befestigungselement 26 wenigstens teilweise in das Wuchtgewicht 17 hineinversenkt werden kann und somit wiederum eine Ersparnis von Bauraum in axialer Richtung für das Gesamtsystem erzielt werden kann. Dieses kann zusätzlich ebenfalls als Wuchtmasse fungieren, je nach Ausgestaltung und Werkstoffwahl kann die Masseverteilung variieren. Ein weiterer wesentlicher Vorteil besteht darin, dass bei entsprechender Ausgestaltung des Befestigungselementes 26 dieses mit einem verschließbaren Kanal versehen werden kann, über den im Bedarfsfall eine Lagerschmierung durch Zufuhr von Schmiermittel in das Innere des Zapfens 7.1 realisiert werden kann, hier durch unterbrochene Linie angedeutet. Die Anordnung des Wuchtgewichtes 17 im Bereich der Stirnseite des Zapfens mit auf der Zapfenachse A₇ liegendem Schwerpunkt S bietet den Vorteil, dass in Abhängigkeit der Ausgestaltung des Wuchtgewichtes 17 - wobei dieses jedoch vorzugsweise rotationssymmetrisch bezogen auf die Achse der Durchgangsöffnung 19 ausgeführt ist - die Unwuchten, die an dieser Stelle besonders auftreten, in optimaler Weise ausgeglichen werden können. Die erfindungsgemäße Durchführung des Wuchtgewichtes 17 durch den Sicherungsring 13, d. h. dieser umschließt das Wuchtgewicht 17 quasi frei von einem Kontakt in radialer Richtung, bewirkt, dass ein Austausch des Wuchtgewichtes 17 frei, d. h. unabhängig, von der bereits montierten Lageanordnung 8 erfolgen kann. Die Lageranordnung und der Sicherungsring 13 müssen nicht gelöst werden. Die Wuchtanordnung, insbesondere das Wuchtgewicht 17, ist immer frei zugänglich. Ferner kann auch die Lagerschmierung bzw. die Versorgung der Lageranordnung 8 mit Schmiermittel in optimaler Weise gewährleistet werden, insbesondere die Zugängigkeit für die Fettpresse.

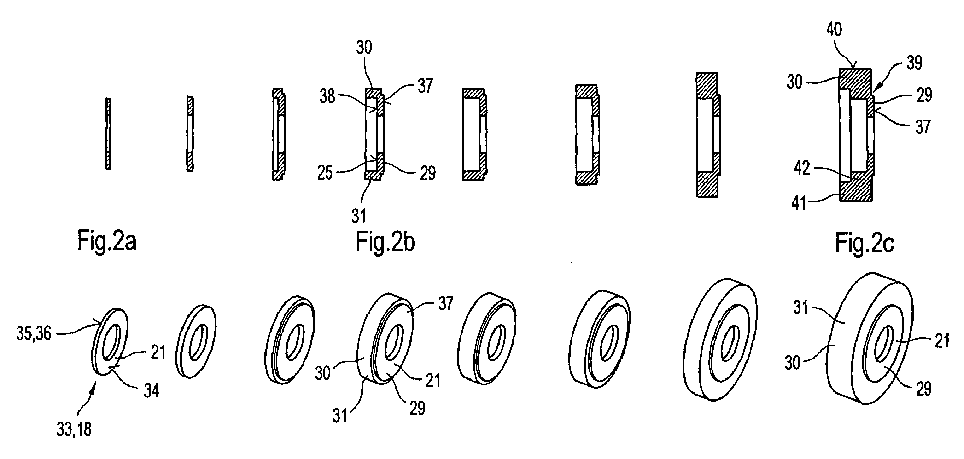

Die Figur 1b verdeutlicht dabei eine besonders vorteilhafte Ausgestaltung des Wuchtgewichtes 17 in Form einer Stufenscheibe 32. Andere Ausgestaltungen sind denkbar, jedoch sind diese immer dadurch charakterisiert, dass diese eine Durchgangsöffnung zur Führung des Befestigungselementes aufweisen und ferner einen Außendurchmesser, zumindest über einen Teilbereich der Dicke, die der Dicke des Sicherungsringes 13 entspricht, der geringer ist als der Innendurchmesser des Sicherungsringes 13 in der jeweiligen Lagerbohrung 5. Das kreisringförmige Element 18 als Wuchtgewicht 17 ist dabei durch Anordnung der Massen außerhalb der Zapfenachse charakterisiert. Dabei kann das kreisringförmige Element 18 verschiedenartig ausgeführt sein. Im einfachsten Fall bei sehr geringem Gewicht lediglich als kreisrunde Scheibe 33, wie in der Figur 2a dargestellt. Diese bildet dabei mit einer Stirnseite 34 die Auflagefläche 21 zur Auflage an der Lagerbuchse 10, während die von der Stirnseite 34 wegweisende Stirnseite 35 als Abstützfläche 36 für das Befestigungselement zur Befestigung an der Lagerbuchse 10 oder aber dem Zapfen 7.1 dient. Demgegenüber verdeutlicht die Figur 2b mögliche Ausgestaltungen als Stufenscheibe 32 analog zu der in der Figur 1b beschriebenen Darstellung, wobei bei diesen Ausführungen auf eine rotationssymmetrische Ausgestaltung abgestellt wird und ferner je nach Gewicht bzw. zu reagierender Gewichtsverteilung die Stufenscheibe mit zwei oder mehr unterschiedlichen Durchmesserbereichen ausgeführt sein kann. Die Figur 2b verdeutlicht dabei noch einmal eine Ausgestaltung der Stufenscheibe 32 gemäß Figur 1 b, umfassend zwei Teilbereiche, einen ersten Teilbereich 29 und einen zweiten Teilbereich 30, wobei der zweite Teilbereich 30 von einem im Bereich des Außenumfanges des ersten Teilbereiches 29 umlaufenden ringförmigen Element bzw. einer ringförmigen Erhebung 31 gebildet wird. Die vom zweiten Teilbereich wegweisende Stirnseite 37 bildet dabei die Auflagefläche 21 zur Auflage an der Lagerbuchse, während die zum zweiten Teilbereich gerichtete Stirnseite 38 des ersten Teilbereiches 29, insbesondere der von diesem gebildete Teilbereich bzw. Flächenbereich wenigstens teilweise eine Auflagefläche 25 für die Befestigungselemente bildet. Der zweite Teilbereich 30 dient dabei hauptsächlich der Masse- bzw. Gewichtsfunktion. Auch hier sind die Massen bzw. Gewichte rotationssymmetrisch um die Achse A₁₉ der Durchgangsöffnung 19 angeordnet. Demgegenüber zeigt die Figur 2c eine weitere Ausgestaltung der Stufenscheibe mit wenigstens drei unterschiedlichen Durchmessern bezogen auf die Achse A₁₉ der Durchgangsöffnung 19. Der zweite Teilbereich 30 ist dabei bei konstantem Außendurchmesser 40 in axialer Richtung betrachtet durch unterschiedliche Innendurchmesserbereiche 41, 42 charakterisiert. Die durch die unterschiedlichen Innendurchmesser realisierten Flächenbereiche können dabei zusätzliche Auflagefunktionen für Befestigungselemente oder andere übernehmen. Vorzugsweise ist bzw. sind die einzelnen Teilbereiche durch im wesentlichen konstante Außendurchmesser charakterisiert. Andere Ausführungen sind denkbar, jedoch zeichnet sich die Ausführung mit konstantem Außendurchmesser durch eine sehr einfache Fertigung aus.

Des weiteren ist bei den in den Figuren 2b und 2c dargestellten Ausführungen zwischen dem ersten und dem zweiten Teilbereich, insbesondere der Auflagefläche 21, ein Bereich geringeren Außendurchmessers 39 vorgesehen, der durch den Abtrag von Material charakterisiert ist. Dieser Abtrag erfolgt dabei im Bereich des Außendurchmessers 40 der Stufenscheibe 32 an der Stirnseite 37 und erstreckt sich in Umfangsrichtung im Bereich vom Außendurchmesser 40 der Stufenscheibe 32 zur Achse der Durchgangsöffnung hin. Dieser materielle Abtrag bzw. dieser Bereich ist hier mit 39 bezeichnet. Dies bedeutet, dass die Auflagefläche 21 relativ klein gehalten wird und somit hinsichtlich der Oberflächenbeschaffenheit bezüglich der Lagerbuchse und des Wuchtgewichtes 17 keinerlei besondere Anforderungen bestehen.

Die erfindungsgemäße Lösung ist nicht durch die In den Figuren 1 und 2 dargestellten Ausführungen beschränkt. Entscheidend ist lediglich, dass die Anordnung des Wuchtgewichtes 17 derart an einem Zapfen 7.1 erfolgt, dass die Lageranordnung 8.1 davon unberührt bleibt, insbesondere die Abstützung der Lagerbuchse 10 über den Sicherungsring 13.

## Patentansprüche

1. Kreuzgelenkanordnung (1) mit einer Wuchtanordnung (2, 16) mit zwei Gelenkgabeln (3.1, 3.2), umfassend jeweils wenigstens zwei Lagerteile (4.11, 4.12 und 4.21, 4.22), die jeweils eine Lagerbohrung (5.11, 5.12, 5.21, 5.22) zur Lagerung eines Zapfens (7.1, 7.2, 7.3., 7.4) eines Zapfenkreuzes (6) aufweisen;
die einzelnen Zapfen (7.1, 7.2, 7.3, 7.4) stützen sich über eine Lageranordnung (8.1, 8.2, 8.3, 8.4), umfassend wenigstens eine Lagerbuchse (10), in der Lagerbohrung (5.11, 5.12, 5.21, 5.22) der Gelenkgabeln (3.1, 3.2) ab;
zur Fixierung der Lagerbuchse (10) in axialer Richtung ist wenigstens ein Sicherungsring (13) vorgesehen, der in einer Nut (14) in der Lagerbohrung (5.11, 5.12, 5.21, 5.22) angeordnet ist;
mit einer im Bereich der Stirnseite (15) des Zapfens (7.1, 7.2, 7.3, 7.4) angeordneten Wuchtanordnung (16), umfassend wenigstens ein Wuchtgewicht (17), das scheibenförmig ausgestaltet ist und einen Wuchtmassenabschnitt aufweist;
**gekennzeichnet durch** die folgenden Merkmale:
das Wuchtgewicht (17) ist als kreisringförmiges Element (18) oder ein Vieleckelement ausgeführt, umfassend eine Durchgangsöffnung (19), deren Achse (A₁₉) in Einbaulage mit der Zapfenachse (A₇) des in der Gelenkgabel (3.1, 3.2) gelagerten Zapfens (7.1, 7.2, 7.3, 7.4) zusammenfällt;
das Wuchtgewicht (17) ist in radialer Richtung innerhalb des Sicherungsringes (13) angeordnet und erstreckt sich von der Stirnseite (15) des Zapfens (7.1, 7.2, 7.3, 7.4) weg;
mit wenigstens einem Befestigungselement (26), welches sich **durch** die Durchgangsöffnung erstreckt und **durch** Form- oder Kraftschluss mit der Lagerbuchse (10) oder dem Zapfen das Wuchtgewicht (17) an diesem befestigt.

2. Kreuzgelenkanordnung (1) nach Anspruch 1, **gekennzeichnet durch** folgende Merkmale:
das Befestigungselement (26) umfasst einen Kopfteil (43) und einen Verbindungsteil (44), wobei der Kopfteil (43) größere Außenabmessungen als der Verbindungsteil (44) aufweist und eine Anschlagsfläche für das Wuchtgewicht (17) bildet;
der Verbindungsteil (44) weist wenigstens einen Teilbereich auf, der form- und/oder kraftschlüssige Verbindungselemente aufweist, die mit dazu komplementär ausgeführten form- und/oder kraftschlüssigen Verbindungselementen an der Lagerbuchse und/oder dem Zapfen zusammenwirken oder eine Geometrie, die einen Kraftschluss mit der durch den Zapfen bzw. die Lagerbuchse bereitgestellten Geometrie ermöglicht.

3. Kreuzgelenkanordnung (1) nach einem der Ansprüche 1 oder 2, **dadurch gekennzeichnet, dass** das Wuchtgewicht (17) als Ringscheibe (33) ausgeführt ist, deren eine Stirnseite (34) wenigstens teilweise eine Auflagefläche (21) für die Lagerbuchse (10) bildet und deren andere Stirnseite (35) wenigstens teilweise eine Anlagefläche (36) für die Anschlagsfläche am Befestigungselement (26) bildet.

4. Kreuzgelenkanordnung (1) nach einem der Ansprüche 1 oder 2, **dadurch gekennzeichnet, dass** das Wuchtgewicht (17) als stufenringscheibenförmiges Element (42) ausgeführt ist, umfassend einen ersten Teilbereich (29), der die Anlagefläche (21) für die Lagerbuchse (10) und die Anlagefläche (25) für das Befestigungselement (26) bildet, und einen zweiten Teilbereich (30), der sich wenigstens teilweise über die axiale Erstreckung des Kopfteiles (43) des Befestigungselementes (26) erstreckt und im Bereich der vom ersten Teilbereich (29) gebildeten von der Anlagefläche (21) für die Lagerbuchse (10) weggerichteten Stirnseite (38) sich rotationssymmetrisch in radialer Richtung in Umfangsrichtung erstreckt.

5. Kreuzgelenkanordnung (1) nach Anspruch 4, **dadurch gekennzeichnet, dass** die Durchgangsöffnung (19) im zweiten Teilbereich (30) unterschiedliche Innendurchmesser aufweist.

6. Kreuzgelenkanordnung (1) nach einem der Ansprüche 4 oder 5, **dadurch gekennzeichnet, dass** der zweite Teilbereich (30) durch einzelne in Umfangsrichtung des ersten Teilbereiches (29) zueinander beabstandet angeordnete Segmente charakterisiert ist.

7. Kreuzgelenkanordnung (1) nach einem der Ansprüche 1 bis 6, **dadurch gekennzeichnet, dass** die Masseverteilung als Funktion der Geometrie des ringschelbenförmigen oder vieleck Elementes und/oder der Werkstoffwahl bestimmt wird.

8. Kreuzgelenkanordnung (1) nach einem der Ansprüche 1 bis 7, **dadurch gekennzeichnet, dass** das Befestigungselement (26) Bestandteil der Wuchtanordnung (16) ist.

9. Kreuzgelenkanordnung (1) nach einem der Ansprüche 1 bis 8, **dadurch gekennzeichnet, dass** die durch die rlngschelbenförmlge Geometrie des Wuchtgewichtes (17) bedingte Durchgangsöffnung (19) derart angeordnet ist, dass diese mit Durchgangsöffnungen an der Lagerbuchse und Schmiermittelbohrungen im Zapfen korrespondiert.

## Claims

1. A cardan universal joint arrangement (1), comprising a balancing arrangement (2, 16) with two yokes (3.1, 3.2), each comprising at least two bearing parts (4.11, 4.12 and 4.21, 4.22) which each comprise a bearing hole (5.11, 5.12, 5.21, 22) for bearing a journal (7.1, 7.2, 7.3, 7.4) of a journal cross;
the individual journals (7.1, 7.2, 7.3, 7.4) rest by way of at least one bearing arrangement (8.1, 8.2, 8.3, 8.4) comprising at least one bearing bush (10) in the bearing hole (5.11, 5.12, 5.21, 5.22) of the yokes (3.1, 3.2);
at least one locking ring (13) is provided for fixing the bearing bush (10) in the axial direction, which ring is arranged in a groove (14) in the bearing hole (5.11, 5.12, 5.21, 5.22);
with a balancing arrangement (16) which is arranged in the region of the face side of the journal (7.1, 7.2, 7.3, 7.4) and comprises at least one balancing weight (17) which is provided with a disk-like configuration and comprises a balancing mass section;
**characterized by** the following features:
the balancing weight (17) is arranged as a circular element (18) or a polygonal element, comprising a through opening (19) whose axis (A₁₉) coincides in the installed position with the journal axis (A₇) of the journal (7.1, 7.2, 7.3, 7.4) held in the yoke (3.1, 3.2);
the balancing weight (17) is arranged in the radial direction within the locking ring (13) and extends away from the face side (15) of the journal (7.1, 7.2, 7.3, 7.4);
with at least one fastening element (26) which extends through the through opening and, by positive or non-positive locking with the bearing bush (10) or the journal, fastens the balancing weight to the same.

2. A cardan universal joint arrangement (1) according to claim 1, **characterized by** the following features:
the fastening element (26) comprises a head part (43) and a connecting part (44), with the head part (43) having larger external dimensions than the connecting part (44) and forming a stop surface for the balancing weight (17);
the connecting part (44) comprises at least one partial area which comprises positive-locking and/or non-positive-locking connecting elements which cooperate with positive-locking and/or non-positive-locking connecting elements on the bearing bush and/or the journal which are configured in a complementary manner with the same, or a geometry enabling a frictional connection with the geometry provided by the journal or the bearing bush.

3. A cardan universal joint arrangement (1) according to one of the claims 1 or 2, **characterized in that** the balancing weight (17) is arranged as a ring disk (33) whose one face side (34) forms at least partly a bearing surface (21) for the bearing bush (10) and whose other face side (35) forms at least partly a contact surface (36) for the contact surface on the fastening element (26).

4. A cardan universal joint arrangement (1) according to one of the claims 1 or 2, **characterized in that** the balancing weight (17) is arranged as an element (42) in the form of a stepped ring disk, comprising a first partial section (29) which forms the contact surface (21) for the bearing bush (10) and the contact surface (25) for the fastening element (26), and a second partial section (30) which extends at least partly over the axial extension of the head part (43) of the fastening element (26) and extends in a rotation-symmetrical way in the radial direction in the circumferential direction in the region of the face side (38) formed by the first partial section (29) and facing away from the contact surface (21) for the bearing bush (10).

5. A cardan universal joint arrangement (1) according to claim 4, **characterized in that** the through opening (19) in the second partial section (30) has different inside diameters.

6. A cardan universal joint arrangement (1) according to one of the claims 4 or 5, **characterized in that** the second partial section (30) is **characterized by** individual segments arranged in a mutually spaced manner with respect to one another in the circumferential direction of the first partial section (29).

7. A cardan universal joint arrangement (1) according to one of the claims 1 to 6, **characterized in that** the distribution of mass is determined as a function of the geometry of the ring-disk-like or polygonal element and/or the choice of material.

8. A cardan universal joint arrangement (1) according to one of the claims 1 to 7, **characterized in that** the fastening element (26) is a component of the balancing arrangement (16).

9. A cardan universal joint arrangement (1) according to one of the claims 1 to 8, **characterized in that** the through opening (19) caused by the ring-disk-like geometry of the balancing weight (17) is arranged in such a way that the same corresponds with through openings in the bearing bush and lubricant bores in the journal.

## Revendications

1. Joint universel (1) avec un dispositif d'équilibrage (2,16) avec deux fourches articulées (3.1,3.2) confinant chacune au moins deux parties palier (4.11,4.12 et 4.21, 4.22) qui comportent chacune un alésage de palier (5.11, 5.12, 5.21, 5.22) pour le logement d'un tourillon (7.1, 7.2, 7.3, 7.4) d'un croisillon de tourillons (6) ;
les tourillons individuels (7.1,7.2, 7.3, 7.4) prennent appui par un dispositif palier (8.1, 8.2, 8.3, 8.4), comportant au moins une boîte de palier (10), dans l'alésage de palier (5.11, 5.12, 5.21, 5.22) des fourches articulées (3.1, 3.2) ;
pour la fixation de la boîte de palier (10) en direction axiale, il est prévu au moins un anneau de sécurité (13) qui est disposé dans une rainure (14) dans l'alésage de palier (5.11, 5.12, 5.21, 5.22) ;
avec un dispositif d'équilibrage (16) ménagé dans la zone de la face frontale (15) du tourillon (7.1, 7.2, 7.3, 7.4) contenant au moins une masse d'équilibrage (17) qui est réalisée sous forme de disque et présente une section de masse d'équilibrage ;
**caractérisé par** les points suivants :
la masse d'équilibrage (17) est réalisée comme un élément annulaire (18) ou polygonal entourant une ouverture de passage (19), dont l'axe (A₁₉) coïncide en position installée avec l'axe de tourillon (A₇) du tourillon (7.1, 7.2, 7.3, 7.4) logé dans la fourche articulée (3.1, 3.2) ;
la masse d'équilibrage (17) est disposée en direction radiale à l'intérieur de l'anneau de sécurité (13) et s'étend à l'écart de la face frontale (15) du tourillon (7.1, 7.2, 7.3, 7.4) ;
avec au moins un élément de fixation (26), qui s'étend au travers de l'ouverture de passage et assure la solidarisation de la masse d'équilibrage (17) avec la boîte de palier (10) sur le tourillon par complémentarité des formes ou par action de force.

2. Joint universel (1) selon la revendication 1,
**caractérisé par** les points suivants :
l'élément de fixation (26) comporte une partie de tête (43) et une partie de liaison, la partie de tête présentant des dimensions extérieures plus grandes que la partie de liaison et formant une surface de butée pour la masse d'équilibrage (17) ;
la partie de liaison présente au moins une région partielle qui comporte des éléments de liaison à complémentarité de formes ou à action de force par rapport à la boîte de palier et/ou le tourillon et/ou une configuration géométrique qui rend possible une coopération par action de forces avec la configuration géométrique du tourillon ou de la boîte de palier.

3. Joint universel (1) selon l'une des revendications 1 ou 2, **caractérisé en ce que** la masse d'équilibrage (17) est réalisée sous la forme d'un disque annulaire (33), dont un côté frontal (34) forme au moins en partie une surface d'appui (21) pour la boîte de palier et dont l'autre côté frontal (35) forme au moins en partie une surface d'appui (36) pour la surface de butée sur l'élément de fixation (26).

4. Joint universel (1) selon l'une des revendications 1 ou 2, **caractérisé en ce que** la masse d'équilibrage est réalisée sous la forme d'un élément en forme de disque annulaire étagé, comportant une première région partielle (29) qui forme la surface d'appui (21) pour la boîte de palier (10) et la surface d'appui (25) pour l'élément de fixation (26), et une seconde région partielle (30) qui s'étend au moins partiellement sur l'étendue axiale de la partie de tête (43) de l'élément de fixation (26) et s'étend dans la région (38) de la face frontale orientée à l'opposé de la face d'appui (21) de la boîte de palier (10) en s'étendant avec symétrie de rotation, en direction radiale en direction périphérique.

5. Joint universel (1) selon la revendication 4, **caractérisé en ce que** l'ouverture de passage (19) dans la deuxième région partielle (30) présente un diamètre intérieur différent.

6. Joint universel (1) selon la revendication 4 ou 5, **caractérisé en ce que** la deuxième région partielle (30) est **caractérisée par** des segments disposés à distance entre eux en direction de la périphérie de la première région partielle (29).

7. Joint universel (1) selon la revendication 1 à 6, **caractérisé par le fait que** la répartition des masses est déterminée en fonction de la géométrie des éléments en forme de disque annulaire ou polygonaux et/ou du choix des matériaux.

8. Joint universel (1) selon une des revendications 1 à 7, **caractérisé en ce que** l'élément de fixation (26) est un composant du dispositif d'équilibrage.

9. Joint universel (1) selon une des revendications 1 à 8, **caractérisé en ce que** l'ouverture de passage (19) déterminée par la géométrie, en forme de disque annulaire de la masse d'équilibrage (17) est agencée de telle sorte que cette ouverture corresponde avec les ouvertures de passage dans la boîte de palier et les perçages de lubrification dans le tourillon.
